# EUROPEAN PATENT APPLICATION

(11) **EP 3 493 134 A1**
(43) Date of publication of application: **05.06.2019**
(21) Application number: 18209574.5
(22) Date of filing: 30.11.2018
(51) Int. Cl.: G06Q 20/42, G06Q 20/40, G06Q 20/32

(54) **ELECTRONIC DEVICE AND METHOD FOR PROCESSING REMOTE PAYMENT**

(30) Priority: 01.12.2017 KR 20170163987
(71) Applicant: Samsung Electronics Co., Ltd., Gyeonggi-do 16677 (KR)
(72) Inventor: Lee, Hui Jae, 16677 Suwon-si (KR); Kim, Shin Wook, 16677 Suwon-si (KR); Kim, Yu Hwan, 16677 Suwon-si (KR)
(74) Representative: Nederlandsch Octrooibureau

(57) **Abstract**

An electronic device is provided. The electronic device includes a first wireless communication circuit that establishes a first wireless connection with an external mobile device, a second wireless communication circuit that wirelessly accesses an internet, a user interface, a processor, and a memory. The memory stores instructions that, when executed, cause the processor to, when a payment request occurs while the first wireless connection is interrupted, receive a user input, in response to receiving the user input, perform user authentication, when the user authentication is successful, transmit a first request for an authentication token to a first external server, receive a first response including the authentication token from the first external server, after receiving the first response, transmit a second request for a transaction token to the external mobile device, and receive a second response including the transaction token from the external mobile device.

## Description

### CROSS-REFERENCE TO RELATED APPLICATION(S)

This application is based on and claims priority under 35 U.S.C. § 119(a) of a Korean patent application number 10-2017-0163987, filed on December 1, 2017, in the Korean Intellectual Property Office, the disclosure of which is incorporated by reference herein in its entirety.

### BACKGROUND

### 1. Field

The disclosure relates to a technology for processing a remote payment.

### 2. Description of Related Art

Due to the development of an information technology (IT) technology, an electronic device has significantly superior functions and provides a user with various functions. Nowadays, financial technology (hereinafter referred to as "Fin-tech") that is a combination of a finance technology and the IT technology gets attention. The Fin-tech evaluated as the financial paradigm shift is extending its boundary to the provision of the financial/payment service and the establishment of a finance/payment platform in an offline, as well as an on-line financial service of the related art.

For example, manufacturers of electronic devices make various efforts to the establishment of a payment system platform, the spread of a mobile payment service, and the like through the cooperation of a credit card issuer or a bank.

The above information is presented as background information only to assist with an understanding of the disclosure. No determination has been made, and no assertion is made, as to whether any of the above might be applicable as prior art with regard to the disclosure.

### SUMMARY

Aspects of the disclosure are to address at least the above-mentioned problems and/or disadvantages and to provide at least the advantages described below. Accordingly, an aspect of the disclosure is to provide an electronic device and a payment method for making a payment even though the electronic device is not connected to a host electronic device through a short range communication network.

The payment function using a wearable electronic device is being provided for a convenient mobile payment service. However, the payment function using the wearable electronic device of the related art has been required to make a Bluetooth communication connection with a connectable host electronic device for the purpose of security and the like.

As a result, a user needs to carry the host electronic device to use the payment function of the wearable electronic device.

Additional aspects will be set forth in part in the description which follows and, in part, will be apparent from the description, or may be learned by practice of the presented embodiments.

In accordance with an aspect of the disclosure, an electronic device is provided. The electronic device includes a first wireless communication circuit configured to establish a first wireless connection with an external mobile device, a second wireless communication circuit configured to wirelessly access an internet, a user interface, a processor operatively connected to the first wireless communication circuit, the second wireless communication circuit, and the user interface, and a memory operatively connected to the processor. The memory stores instructions that, when executed, cause the processor to, when a payment request occurs while the first wireless connection is interrupted, receive a user input through the user interface, in response to receiving the user input, perform a user authentication, when the user authentication is successful, transmit a first request for an authentication token to a first external server through the second wireless communication circuit, receive a first response including the authentication token from the first external server through the second wireless communication circuit, after receiving the first response, transmit a second request for a transaction token to the external mobile device through the second wireless communication circuit, and receive a second response including the transaction token from the external mobile device through the second wireless communication circuit.

In accordance with another aspect of the disclosure, a method in which an electronic device makes a payment is provided. The method includes establishing a first wireless connection with an external mobile device through a first wireless communication circuit, storing a common identification (ID) associated with the external mobile device, receiving a payment request in a state where the first wireless connection through the first wireless communication circuit is disconnected, receiving a user input, in response to receiving the user input, performing a user authentication, when the user authentication is successful, transmitting a first request for an authentication token to a first external server through a second wireless communication circuit, receiving a first response including the authentication token from the first external server through the second wireless communication circuit, after receiving the first response, transmitting a second request for a transaction token to the external mobile device through the second wireless communication circuit, receiving a second response including the transaction token from the external mobile device through the second wireless communication circuit, and transmitting a payment signal including the transaction token to an external device.

In accordance with another aspect of the disclosure, an electronic device is provided. The electronic device includes a first wireless communication circuit configured to establish a first wireless connection with an external mobile device, a second wireless communication circuit configured to wirelessly access an internet, a processor operatively connected to the first wireless communication circuit and the second wireless communication circuit, and a memory operatively connected to the processor. The memory stores instructions that, when executed, cause the processor to establish the first wireless connection with the external mobile device through the first wireless communication circuit, share a common identification (ID) with the external mobile device through the first wireless communication circuit, while the first wireless connection is interrupted, receive a first request for a transaction token from the external mobile device through the second wireless communication circuit, in response to receiving the first request, transmit a second request for the transaction token to a first external server through the second wireless communication circuit, receive a first response including the transaction token from the first external server through the second wireless communication circuit, and in response to receiving the first response, transmit a second response including the transaction token to the external mobile device through the second wireless communication circuit.

In accordance with another aspect of the disclosure, an electronic device may receive transaction data by using an Internet network, and thus the electronic device radiating a payment signal may make a payment even though being far away from a host electronic device.

In accordance with another aspect of the disclosure, transaction data may be transmitted or received securely even through the electronic device uses an Internet network.

Besides, a variety of effects directly or indirectly understood through the disclosure may be provided.

Other aspects, advantages, and salient features of the disclosure will become apparent to those skilled in the art from the following detailed description, which, taken in conjunction with the annexed drawings, discloses various embodiments of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a block diagram of an electronic device in a network environment according to an embodiment of the disclosure;
FIG. 2 illustrates an environment in which a payment transaction is made according to an embodiment of the disclosure;
FIG. 3 illustrates a block diagram of an electronic device according to an embodiment of the disclosure;
FIG. 4 is a flowchart illustrating a procedure of performing a payment according to an embodiment of the disclosure;
FIG. 5 is a flowchart illustrating a procedure in which a first electronic device and a second electronic device establish a second wireless communication according to an embodiment of the disclosure;
FIG. 6 is a flowchart illustrating a procedure in which a communication scheme of a second electronic device is changed according to an embodiment of the disclosure;
FIG. 7 is a flowchart illustrating an operation performed by a first electronic device to make a payment according to an embodiment of the disclosure;
FIG. 8 is a flowchart illustrating an operation performed by a second electronic device to make a payment according to an embodiment of the disclosure;
FIG. 9 illustrates a screen for setting an electronic device, a transaction token request of which is to be approved, according to an embodiment of the disclosure; and
FIG. 10 illustrates a screen displayed when an electronic device receives a transaction token request according to an embodiment of the disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalent.

It is to be understood that the singular forms "a," "an," and "the" include plural referents unless the context clearly dictates otherwise. Thus, for example, reference to "a component surface" includes reference to one or more of such surfaces.

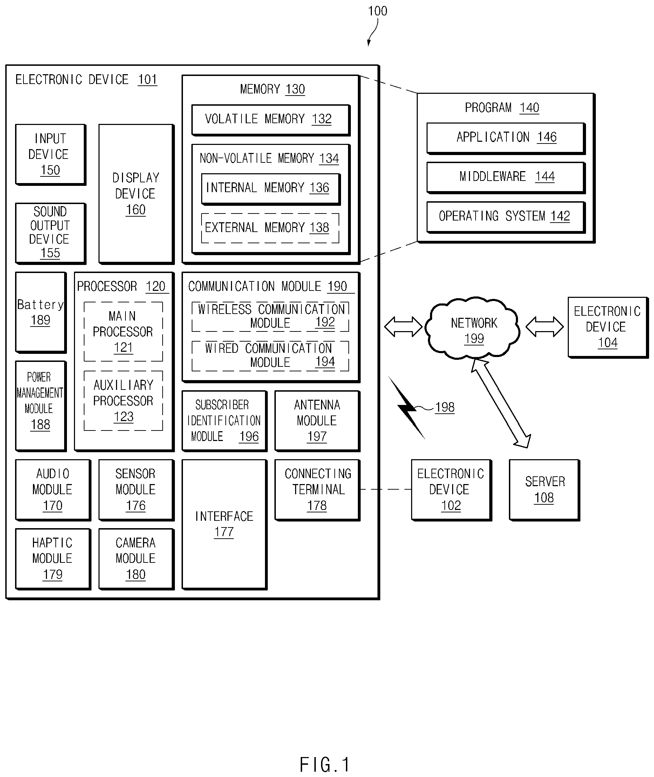

FIG. 1 is a block diagram of an electronic device in a network environment according to an embodiment of the disclosure.

Referring to FIG. 1, an electronic device 101 may communicate with an electronic device 102 through a first network 198 (e.g., a short-range wireless communication) or may communicate with an electronic device 104 or a server 108 through a second network 199 (e.g., a long-distance wireless communication) in a network environment 100. According to an embodiment, the electronic device 101 may communicate with the electronic device 104 through the server 108. According to an embodiment, the electronic device 101 may include a processor 120, a memory 130, an input device 150, a sound output device 155, a display device 160, an audio module 170, a sensor module 176, an interface 177, a haptic module 179, a camera module 180, a power management module 188, a battery 189, a communication module 190, a subscriber identification module 196, and an antenna module 197. According to some embodiments, at least one (e.g., the display device 160 or the camera module 180) among components of the electronic device 101 may be omitted or other components may be added to the electronic device 101. According to some embodiments, some components may be integrated and implemented as in the case of the sensor module 176 (e.g., a fingerprint sensor, an iris sensor, or an illuminance sensor) embedded in the display device 160 (e.g., a display).

The processor 120 may operate, for example, software (e.g., a program 140) to control at least one of other components (e.g., a hardware or software component) of the electronic device 101 connected to the processor 120 and may process and compute a variety of data. The processor 120 may load a command set or data, which is received from other components (e.g., the sensor module 176 or the communication module 190), into a volatile memory 132, may process the loaded command or data, and may store result data into a non-volatile memory 134. According to an embodiment, the processor 120 may include a main processor 121 (e.g., a central processing unit or an application processor) and an auxiliary processor 123 (e.g., a graphic processing device, an image signal processor, a sensor hub processor, or a communication processor), which operates independently from the main processor 121, additionally or alternatively uses less power than the main processor 121, or is specified to a designated function. In this case, the auxiliary processor 123 may operate separately from the main processor 121 or embedded.

In this case, the auxiliary processor 123 may control, for example, at least some of functions or states associated with at least one component (e.g., the display device 160, the sensor module 176, or the communication module 190) among the components of the electronic device 101 instead of the main processor 121 while the main processor 121 is in an inactive (e.g., sleep) state or together with the main processor 121 while the main processor 121 is in an active (e.g., an application execution) state. According to an embodiment, the auxiliary processor 123 (e.g., the image signal processor or the communication processor) may be implemented as a part of another component (e.g., the camera module 180 or the communication module 190) that is functionally related to the auxiliary processor 123. The memory 130 may store a variety of data used by at least one component (e.g., the processor 120 or the sensor module 176) of the electronic device 101, for example, software (e.g., the program 140) and input data or output data with respect to commands associated with the software. The memory 130 may include the volatile memory 132 or the non-volatile memory 134.

The program 140 may be stored in the memory 130 as software and may include, for example, an operating system (OS) 142, a middleware 144, or an application 146.

The input device 150 may be a device for receiving a command or data, which is used for a component (e.g., the processor 120) of the electronic device 101, from an outside (e.g., a user) of the electronic device 101 and may include, for example, a microphone, a mouse, or a keyboard.

The sound output device 155 may be a device for outputting a sound signal to the outside of the electronic device 101 and may include, for example, a speaker used for general purposes, such as multimedia play or recordings play, and a receiver used only for receiving calls. According to an embodiment, the receiver and the speaker may be either integrally or separately implemented.

The display device 160 may be a device for visually presenting information to the user of the electronic device 101 and may include, for example, a display, a hologram device, or a projector and a control circuit for controlling a corresponding device. According to an embodiment, the display device 160 may include a touch circuitry or a pressure sensor for measuring an intensity of pressure on the touch.

The audio module 170 may convert a sound and an electrical signal in dual directions. According to an embodiment, the audio module 170 may obtain the sound through the input device 150 or may output the sound through an external electronic device (e.g., the electronic device 102 (e.g., a speaker or a headphone)) wired or wirelessly connected to the sound output device 155 or the electronic device 101.

The sensor module 176 may generate an electrical signal or a data value corresponding to an operating state (e.g., power or temperature) inside or an environmental state outside the electronic device 101. The sensor module 176 may include, for example, a gesture sensor, a gyro sensor, a barometric pressure sensor, a magnetic sensor, an acceleration sensor, a grip sensor, a proximity sensor, a color sensor, an infrared sensor, a biometric sensor, a temperature sensor, a humidity sensor, or an illuminance sensor.

The interface 177 may support a designated protocol wired or wirelessly connected to the external electronic device (e.g., the electronic device 102). According to an embodiment, the interface 177 may include, for example, a high-definition multimedia interface (HDMI), a universal serial bus (USB) interface, a secure digital (SD) card interface, or an audio interface.

A connecting terminal 178 may include a connector that physically connects the electronic device 101 to the external electronic device (e.g., the electronic device 102), for example, an HDMI connector, a USB connector, an SD card connector, or an audio connector (e.g., a headphone connector).

The haptic module 179 may convert an electrical signal to a mechanical stimulation (e.g., vibration or movement) or an electrical stimulation perceived by the user through tactile or kinesthetic sensations. The haptic module 179 may include, for example, a motor, a piezoelectric element, or an electric stimulator.

The camera module 180 may shoot a still image or a video image. According to an embodiment, the camera module 180 may include, for example, at least one lens, an image sensor, an image signal processor, or a flash.

The power management module 188 may be a module for managing power supplied to the electronic device 101 and may serve as at least a part of a power management integrated circuit (PMIC).

The battery 189 may be a device for supplying power to at least one component of the electronic device 101 and may include, for example, a non-rechargeable (primary) battery, a rechargeable (secondary) battery, or a fuel cell.

The communication module 190 may establish a wired or wireless communication channel between the electronic device 101 and the external electronic device (e.g., the electronic device 102, the electronic device 104, or the server 108) and support communication execution through the established communication channel. The communication module 190 may include at least one communication processor operating independently from the processor 120 (e.g., the application processor) and supporting the wired communication or the wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication module) and may communicate with the external electronic device using a corresponding communication module among them through the first network 198 (e.g., the short-range communication network such as a Bluetooth, a Wi-Fi direct, or an infrared data association (IrDA)) or the second network 199 (e.g., a long-distance wireless communication network such as a cellular network, an internet, or a computer network (e.g., LAN or wide area network (WAN)). The above-mentioned various communication modules may be implemented into one chip or into separate chips, respectively.

According to an embodiment, the wireless communication module 192 may identify and authenticate the electronic device 101 using user information stored in the subscriber identification module 196 in the communication network.

The antenna module 197 may include one or more antennas to transmit or receive the signal or power to or from an external source. According to an embodiment, the communication module 190 (e.g., the wireless communication module 192) may transmit or receive the signal to or from the external electronic device through the antenna suitable for the communication method.

Some components among the components may be connected to each other through a communication method (e.g., a bus, a general purpose input/output (GIPO), a serial peripheral interface (SPI), or a mobile industry processor interface (MIPI)) used between peripheral devices to exchange signals (e.g., a command or data) with each other.

According to an embodiment, the command or data may be transmitted or received between the electronic device 101 and the electronic device 104 through the server 108 connected to the second network 199. Each of the electronic devices 102 and 104 may be the same or different types as or from the electronic device 101. According to an embodiment, all or some of the operations performed by the electronic device 101 may be performed by another electronic device or a plurality of external electronic devices. When the electronic device 101 performs some functions or services automatically or by request, the electronic device 101 may request the external electronic device to perform at least some of the functions related to the functions or services, in addition to or instead of performing the functions or services by itself. The external electronic device receiving the request may carry out the requested function or the additional function and transmit the result to the electronic device 101. The electronic device 101 may provide the requested functions or services based on the received result as is or after additionally processing the received result. To this end, for example, a cloud computing, distributed computing, or client-server computing technology may be used.

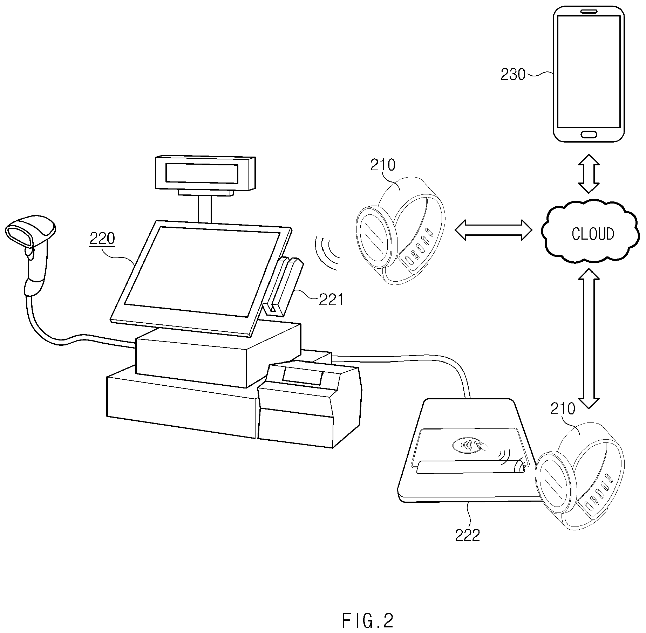

FIG. 2 illustrates an environment in which a payment transaction is made, according to an embodiment of the disclosure.

Referring to FIG. 2, an electronic device 210 (e.g., the electronic device 101), according to an embodiment, may receive a transaction token from an external electronic device 230 (e.g., the electronic device 102) through a cloud server and may generate a transaction signal including the received transaction token.

The electronic device 210, according to an embodiment, may interact with an external device 220 wirelessly. For example, the electronic device 210 may correspond to a wearable electronic device equipped with a contactless payment module, and the external device 220 may correspond to a point of sale (POS) terminal. The electronic device 210 and the external device 220 may establish, for example, a payment channel for a payment transaction process. The electronic device 210 may transmit and/or receive data (e.g., a transaction signal including the transaction token) associated with the payment transaction to and/or from the external device 220 through the established payment channel.

According to an embodiment, the electronic device 210 and the external device 220 may communicate with each other through a magnetic secure transmission (MST) channel. For example, when a user activates an MST module embedded in or externally coupled to the electronic device 210, the electronic device 210 may generate and emit a magnetic field, which is modulated in a specified scheme to include payment data, by using the activated MST module. Afterward, when the electronic device 210 approaches an MST reader 221 included in the external device 220 to be closer than a specified distance (e.g., 1 - 5 cm), the payment data may be transmitted to the external device 220 through the emitted magnetic field.

Also, according to an embodiment, the electronic device 210 and the external device 220 may communicate with each other through a near field communication (NFC) channel. For example, when the user activates an NFC module embedded in or externally coupled to the electronic device 210, the electronic device 210 may generate and emit an electric field (or electromagnetic field) of a specified frequency (e.g., 13.56 MHz) including payment data, by using the activated NFC module. Afterward, when the electronic device 210 approaches an NFC reader 222 included in the external device 220 to be closer than a specified distance (e.g., 10 cm), the payment data may be transmitted to the external device 220 through the emitted electric field (or an electromagnetic field).

According to an embodiment, the external device 220 may complete a payment transaction based on the received payment data received from the electronic device 210. For example, the external device 220 may complete a payment transaction by interacting with a mobile payment service server and/or the server of a financial institution through a network (e.g., a POS system network, Internet, or the like).

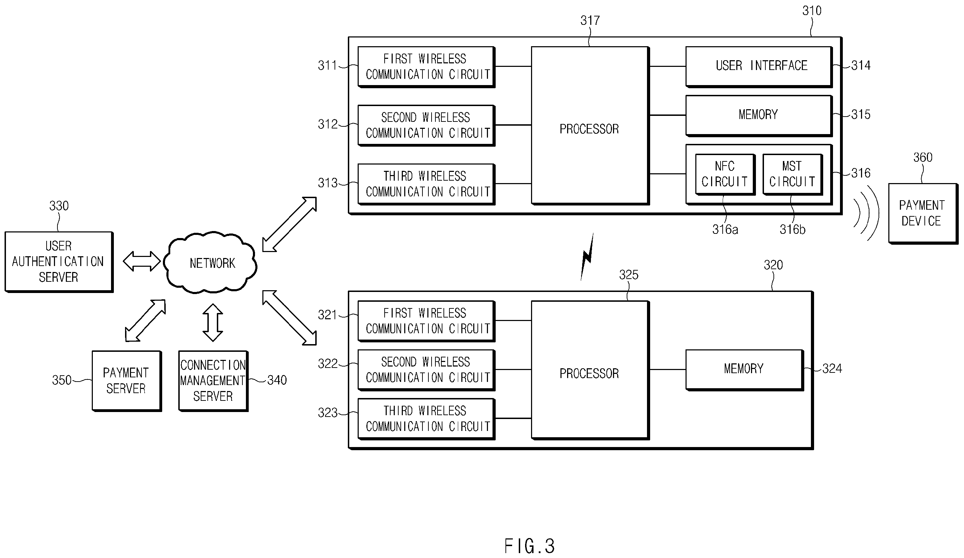

FIG. 3 illustrates an example of each of components included in a payment environment, according to an embodiment of the disclosure.

Referring to FIG. 3, the payment environment according to various embodiments of the disclosure may include a first electronic device 310, a second electronic device 320, a user authentication server 330, a connection management server 340, a payment server 350, and a payment device 360. For example, the first electronic device 310 and the payment device 360 may correspond to the electronic device 210 and the external device 220 illustrated in FIG. 2, respectively.

The first electronic device 310 (e.g., the electronic device 101) may include a first wireless communication circuit 311, a second wireless communication circuit 312, a third wireless communication circuit 313, a user interface 314, a memory 315, a payment circuit 316, and a processor 317. According to various embodiments, the first electronic device 310 may be implemented without some elements or may be implemented to further include one or more components not illustrated in FIG. 3. For example, the first electronic device 310 may not include an MST circuit 316b of the payment circuit 316. For another example, the first electronic device 310 may further include a sensor module for user authentication. The sensor module may include a biometric sensor such as an iris sensor and a fingerprint sensor.

The first wireless communication circuit 311 may be configured such that the first electronic device 310 establishes the first wireless connection with the second electronic device 320. In an embodiment, the first wireless communication circuit 311 may provide Bluetooth communication, Wi-Fi direct, or the like. For example, the first wireless communication circuit 311 may allow the first electronic device 310 to communicate with the second electronic device 320.

Each of the second wireless communication circuit 312 and the third wireless communication circuit 313 may be configured to wirelessly access the Internet.

According to an embodiment, the second wireless communication circuit 312 may be configured to provide Wi-Fi communication, and the third wireless communication circuit 313 may be configured to provide cellular communication (e.g., long-term evolution (LTE), LTE-advanced (LTE-A), code division multiple access (CDMA), wideband DCMA (WCDMA), universal mobile telecommunications service (UMTS), wireless broadband (WiBro), or global system for mobile communications (GSM)). For another example, the first electronic device 310 may not include the third wireless communication circuit 313.

According to an embodiment, when the first electronic device 310 does not include the third wireless communication circuit 313, the second wireless communication circuit 312 may be configured to provide Wi-Fi communication or cellular communication.

The second wireless communication circuit 312 and the third wireless communication circuit 313 may allow the first electronic device 310 to communicate with the user authentication server 330, the connection management server 340, and the second electronic device 320 via Internet.

The user interface 314 may receive a user input. For example, the user interface 314 may include a dial, a microphone associated with a voice input, a touch screen display, or the like.

The memory 315 may store a command, information, or data associated with operations of the first wireless communication circuit 311, the second wireless communication circuit 312, the third wireless communication circuit 313, the user interface 314, the payment circuit 316, and the processor 317 included in the first electronic device 310. For example, the memory 315 may store instructions that, when executed, cause the processor 317 to perform various operations described in the disclosure. After the instructions are implemented with, for example, software such as an application program (e.g., a payment application, a substitute payment application, or the like), an OS, or firmware, the instructions may be stored in the memory 315 or may be embedded in hardware.

According to various embodiments, the memory 315 may include a security module. The security module may store information (or data) associated with a payment card. The security module may be implemented with, for example, a secure element (SE), an embedded SE (eSE), a universal integrated circuit (IC) card (UICC), an embedded UICC (eUICC), a micro SD card, a subscriber identifier module (SIM) card, a Trust zone being storage (or the memory 315) safely protected from an unauthorized access, or the like.

The payment circuit 316 may radiate a signal for making a payment to the outside. For example, the payment circuit 316 may transmit a signal including a transaction token to the payment device 360 (e.g., a POS device). According to an embodiment, the payment circuit 316 may further include at least one of an NFC circuit 316a or the MST circuit 316b.

The NFC circuit 316a may include, for example, an NFC controller (or an NFC driver) and a radio frequency (RF) module driven by the NFC controller. The NFC controller may convert payment data into an electrical signal and may transfer the electrical signal to the RF module. For example, the RF module may transmit and receive payment data or any other data to and from a payment device in an electromagnetic induction manner, based on the electrical signal received from the NFC controller.

For example, the MST circuit 316b may include an MST controller (or an MST driver) and an inductor driven by the MST controller. The MST controller may convert the payment data into an electrical signal (e.g., a pulse stream) and may transfer the electrical signal to the inductor. The inductor may generate magnetic field fluctuations (e.g., magnetic impulses) modulated in a specified scheme based on the electrical signal received from the MST controller and may transmit payment data or any other data to the payment device through the magnetic field fluctuations.

According to various embodiments, the payment circuit 316 may further include various components for processing a payment by using a bar code, a quick response (QR) code, an IC chip, or the like.

For example, the processor 317 may be connected to the first wireless communication circuit 311, the second wireless communication circuit 312, the third wireless communication circuit 313, the user interface 314, the memory 315, and the payment circuit 316 included in the first electronic device 310 and may execute operations or data processing associated with control and/or communication of the first wireless communication circuit 311, the second wireless communication circuit 312, the third wireless communication circuit 313, the user interface 314, the memory 315, and the payment circuit 316 included in the first electronic device 310.

According to an embodiment, the processor 317 may execute (or launch) an application for making a payment according to various embodiments of the disclosure. Various payment methods of the disclosure may be performed by the execution of the application.

According to an embodiment, the processor 317 may share a common ID or the like with the second electronic device 320 through the first wireless communication circuit 311 and may process user authentication through the second wireless communication circuit 312 or the third wireless communication circuit 313. According to an embodiment, the processor 317 may transmit a request for a transaction token, to the second electronic device 320 through the second wireless communication circuit 312 or the third wireless communication circuit 313 and may receive a response including a payment token from the second electronic device 320. According to an embodiment, the processor 317 may radiate a payment signal including the payment token through the payment circuit 316. The above-described operations of the processor 317 are, but are not limited to, an example.

The second electronic device 320 (e.g., the electronic device 102 or the electronic device 104) may include a first wireless communication circuit 321, a second wireless communication circuit 322, a third wireless communication circuit 323, a memory 324, and a processor 325. According to various embodiments, the second electronic device 320 may be implemented without some elements or may be implemented to further include one or more components not illustrated in FIG. 3.

The first wireless communication circuit 321 may be configured such that the second electronic device 320 establishes the first wireless connection with the first electronic device 310. In an embodiment, the first wireless communication circuit 321 may provide Bluetooth communication, Wi-Fi direct, or the like. For example, the first wireless communication circuit 321 may allow the second electronic device 320 to communicate with the first electronic device 310.

Each of the second wireless communication circuit 322 and the third wireless communication circuit 323 may be configured to wirelessly access the Internet.

According to an embodiment, the second wireless communication circuit 322 may be configured to provide Wi-Fi communication, and the third wireless communication circuit 323 may be configured to provide cellular communication. According to various embodiments, the second electronic device 320 may not include the third wireless communication circuit 323.

According to an embodiment, when the second electronic device 320 does not include the third wireless communication circuit 323, the second wireless communication circuit 322 may be configured to provide Wi-Fi communication or cellular communication.

The second wireless communication circuit 322 and the third wireless communication circuit 323 may allow the second electronic device 320 to communicate with the connection management server 340, the payment server 350, and the first electronic device 310 via the Internet.

The memory 324 may store a command, information, or data associated with the operations of the first wireless communication circuit 321, the second wireless communication circuit 322, the third wireless communication circuit 323, and the processor 325 included in the second electronic device 320. For example, the memory 324 may store instructions that, when executed, cause the processor 325 to perform various operations described in the disclosure. After the instructions are implemented with, for example, software such as an application program (e.g., a payment application, a substitute payment application, or the like), an OS, or firmware, the instructions may be stored in the memory 324 or may be embedded in hardware.

According to various embodiments, the memory 324 may be used to include a security module. The security module may store information (or data) associated with a payment card. The security module may be implemented with, for example, an SE, an eSE, a UICC, an eUICC, a micro SD card, an SIM card, a Trust zone being storage (or the memory 324) safely protected from an unauthorized access, or the like.

For example, the processor 325 may be connected to the first wireless communication circuit 321, the second wireless communication circuit 322, the third wireless communication circuit 323, and the memory 324 included in the second electronic device 320 and may execute operations or data processing associated with control and/or communication of the first wireless communication circuit 321, the second wireless communication circuit 322, the third wireless communication circuit 323, and the memory 324 included in the second electronic device 320.

According to an embodiment, the processor 325 may share a common ID or the like with the first electronic device 310 through the first wireless communication circuit 321, may receive a request for a transaction token from the first electronic device 310 through the second wireless communication circuit 322 or the third wireless communication circuit 323, may transmit the request for the transaction token to the payment server 350, may receive a response including the transaction token from the payment server 350, and may transmit a response including a payment token to the first electronic device 310. The above-described operations of the processor 325 are, but are not limited to, an example.

The user authentication server 330 (e.g., the server 108) may receive a request for user authentication from the first electronic device 310. When the user authentication is successful, the user authentication server 330 may transmit an authentication token to the first electronic device 310. According to an embodiment, the user authentication server 330 may perform user authentication by using at least one of a user account ID, a fast identity online (FIDO) ID, a device ID, a card member ID, a credit card issuer code, or an authentication type, which is received from the first electronic device 310.

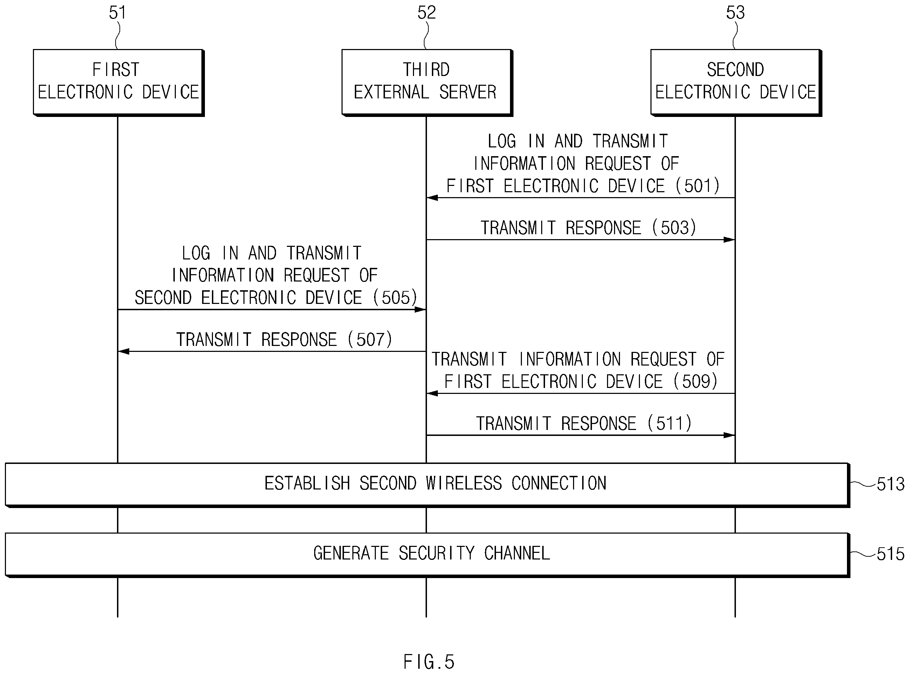

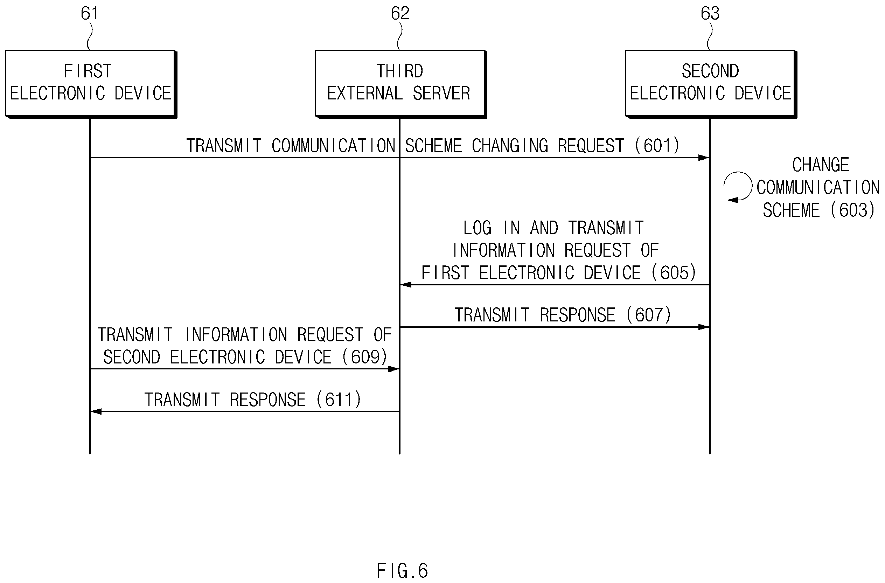

The connection management server 340 (e.g., the server 108) may perform an operation for connecting the first electronic device 310 and the second electronic device 320 to each other via the Internet. For example, the connection management server 340 may transmit the information of the first electronic device 310 to the second electronic device 320 and may transmit information of the second electronic device 320 to the first electronic device 310. Hereinafter, the detailed operation of the connection management server 340 will be described with reference to FIGS. 5 and 6.

For example, the payment server 350 (e.g., the server 108) may receive a request for a transaction token from the second electronic device 320 and may generate the transaction token through interaction with the server of a financial institution. The payment server 350 may transmit the generated transaction token to the second electronic device 320.

The payment device 360 may include, for example, a POS terminal installed in a merchant or an electronic device supporting a person-to-person payment or person-to-person remittance. The payment device 360 may receive a signal including the transaction token received from the first electronic device 310 to complete a payment transaction.

According to an embodiment, the payment device 360 may complete the payment transaction by interacting with the payment server 350 through a network (e.g., a cellular network, a POS system network, Internet, or the like).

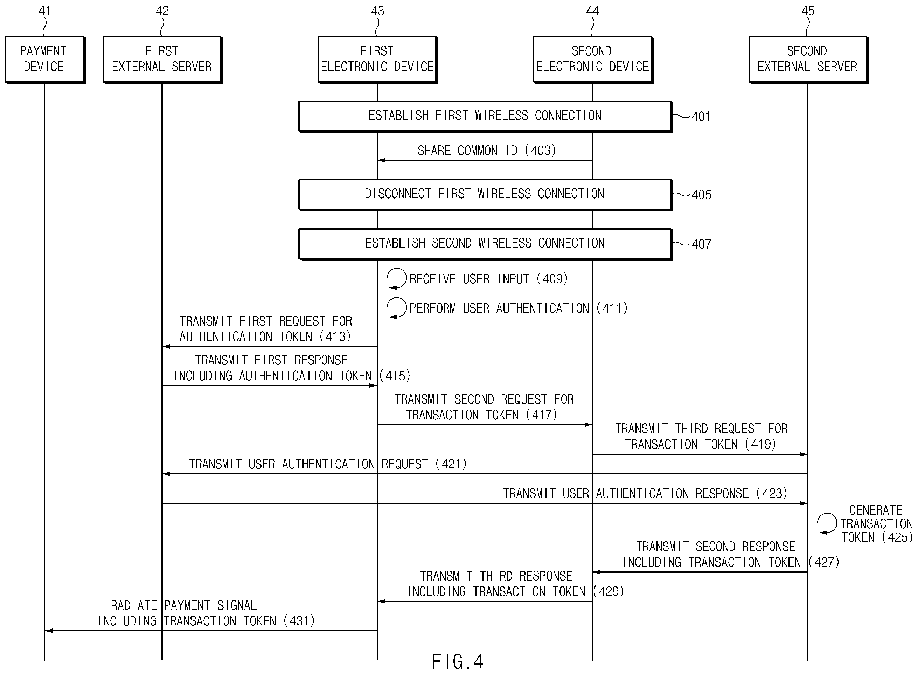

Hereinafter, it is assumed that the devices of FIG. 3 perform the processes of FIGS. 4 to 6. According to an embodiment, in FIGS. 4 to 6, a payment device 41 may correspond to the payment device 360, a first external server 42 may correspond to the user authentication server 330, first electronic devices 43, 51, and 61 may correspond to the first electronic device 310, second electronic devices 44, 53, and 63 may correspond to the second electronic device 320, a second external server 45 may correspond to the payment server 350, and third external servers 52 and 62 may correspond to the connection management server 340.

The operation described as being performed by first electronic devices 43, 51, and 61 and second electronic devices 44, 53, and 63 may be implemented by using instructions performed (or executed) by the processor 317 and 325 of each of first electronic devices 43, 51, and 61 and second electronic devices 44, 53, and 63. The instructions may be stored in, for example, a computer-readable recording medium or the memory 315 or 324 of each of first electronic devices 43, 51, and 61 and second electronic devices 44, 53, and 63 illustrated in FIG. 3.

FIG. 4 is a flowchart illustrating a procedure of performing a payment, according to an embodiment of the disclosure.

Referring to FIG. 4, in operation 401, a first electronic device 43 and a second electronic device 44 may establish a first wireless connection between each other.

According to an embodiment, the processor 317 of the first electronic device 43 and the processor 325 of the second electronic device 44 may establish the first wireless connection through the first wireless communication circuits 311 and 321. For example, the first electronic device 43 and the second electronic device 44 may be paired with each other over Bluetooth communication.

In operation 403, the first electronic device 43 and the second electronic device 44 may share a common ID with each other through the first wireless connection.

For example, the processor 325 of the second electronic device 44 may transmit a group ID to the first electronic device 43 over the first wireless communication. For another example, the processor 317 of the first electronic device 43 may transmit a group ID to the second electronic device 44 over the first wireless communication. In an embodiment, the group ID may indicate that the first electronic device 43 and the second electronic device 44 are included in one group.

According to an embodiment, the processor 325 of the second electronic device 44 may further transmit an account token over the first wireless communication. According to an embodiment, when the first electronic device 43 and the second electronic device 44 establish a second wireless connection, the account token may be data indicating that each of the first electronic device 43 and the second electronic device 44 is a trusted device.

According to an embodiment, the processor 325 of the second electronic device 44 may transmit an encryption key (e.g., a public key) to the first electronic device 43 over the first wireless communication. According to an embodiment, each of the first electronic device 43 and the second electronic device 44 may have the encryption key (e.g., the private key) corresponding to each electronic device.

In operation 405, the first electronic device 43 and the second electronic device 44 may disconnect the first wireless connection.

According to an embodiment, the first wireless connection may be disconnected because the distance between the first electronic device 43 and the second electronic device 44 exceeds the maximum communication distance of the first wireless connection.

According to an embodiment, when the first wireless communication circuit 311 or 321 of at least one of the first electronic device 43 or the second electronic device 44 is turned off, the first wireless connection may be disconnected.

In operation 407, the first electronic device 43 and the second electronic device 44 may establish a second wireless connection between each other.

According to an embodiment, the processor 317 of the first electronic device 43 and the processor 325 of the second electronic device 44 may establish the second wireless connection through the second wireless communication circuits 312 and 322.

According to an embodiment, the second wireless connection may be a peer to peer (P2P) connection using an Internet network. According to an embodiment, each of the first electronic device 43 and the second electronic device 44 connected to the Internet through each of the second wireless communication circuits 312 and 322 may have an Internet protocol (IP) address. The first electronic device 43 and the second electronic device 44 may establish the second wireless connection by using the IP address of each other.

According to an embodiment, when the first wireless communication is interrupted, the first electronic device 43 and the second electronic device 44 may establish the second wireless connection between each other through a third external server by using the common ID. Hereinafter, the detailed method in which the first electronic device 43 and the second electronic device 44 establish the second wireless connection will be described with reference to FIG. 5.

According to various embodiments, operation 407 may be performed after an operation among operations 409, 411, 413, and 415 before operation 417.

In operation 409, the processor 317 of the first electronic device 43 may receive a user input through the user interface 314.

According to an embodiment, the user input may be a user input to request a transaction. For example, the user input may be an input to execute an application for performing the transaction such as a payment or the like and to select a means for performing the transaction. For example, the means for performing the transaction may be a credit card, a debit card, a bankbook, or the like for performing a payment transaction.

In operation 411, the processor 317 of the first electronic device 43 may perform user authentication in response to the user input.

According to an embodiment, the processor 317 of the first electronic device 43 may use at least one authentication scheme of a password authentication scheme, a pattern authentication scheme, a fingerprint authentication scheme, or an iris authentication scheme, for the user authentication.

When the user authentication is successful, in operation 413, the processor 317 of the first electronic device 43 may transmit a first request for an authentication token, to the first external server 42 through the second wireless communication circuit 312.

According to an embodiment, the first request may further include at least one of a user account ID, a FIDO ID, a device ID, a card member ID, a credit card issuer code, or an authentication type.

According to an embodiment, before transmitting the first request, the processor 317 of the first electronic device 43 may make a request for the IP address of the first external server 42 to the second electronic device 44 through the second wireless communication circuit 312 and may receive a response including the IP address of the first external server 42 from the second electronic device 44.

According to an embodiment, when making a request for the IP address of the first external server 42, the processor 317 of the first electronic device 43 may further transmit data associated with the user input to the second electronic device 44. For example, the processor 317 of the first electronic device 43 may further transmit data (e.g., the name of the selected credit card, the card issuer of a credit card, or the like) associated with the means for performing the transaction selected by a user, to the second electronic device 44. According to an embodiment, the processor 325 of the second electronic device 44 may transmit a response including the address of the first external server 42 corresponding to data associated with the received user input, to the first electronic device 43.

According to an embodiment, the processor 317 of the first electronic device 43 may transmit the first request to the first external server 42 with reference to the received address of the first external server 42.

According to an embodiment, the memory 315 of the first electronic device 43 may store one or more addresses of the first external server 42 in advance. According to an embodiment, the processor 317 of the first electronic device 43 may transmit the first request to the first external server 42 with reference to the address of the first external server 42 stored in the memory 315. In an embodiment, the processor 317 of the first electronic device 43 may transmit the first request to the first external server 42 with reference to the address of the first external server 42 corresponding to the means for performing the transaction selected by the user.

In operation 415, the first external server 42 may transmit a first response including the authentication token to the first electronic device 43.

According to an embodiment, the processor 317 of the first electronic device 43 may receive the first response including the authentication token from the first external server 42 through the second wireless communication circuit 312. For example, the first response may further include at least one of a FIDO authentication token or a key ID.

In operation 417, the processor 317 of the first electronic device 43 may transmit a second request for a transaction token to the second electronic device 44 through the second wireless communication circuit 312.

According to an embodiment, the processor 317 of the first electronic device 43 may transmit a second request through the established second wireless communication.

According to an embodiment, the processor 317 of the first electronic device 43 may further transmit the authentication token received from the first external server 42, to the second electronic device 44 through the second wireless communication circuit 312.

According to an embodiment, before transmitting the second request, the processor 317 of the first electronic device 43 may perform an operation to change a communication scheme, which is used by the second electronic device 44, to the predetermined communication scheme. Hereinafter, the detailed procedure of changing a communication scheme will be described with reference to FIG. 6.

In operation 419, the processor 325 of the second electronic device 44 may transmit the third request for the transaction token to the second external server 45 through the second wireless communication circuit 322.

According to an embodiment, the processor 325 of the second electronic device 44 may further transmit an authentication token received from the first electronic device 43, to the second external server 45 through the second wireless communication circuit 322.

In operation 421, the second external server 45 may transmit a user authentication request to the first external server 42 in response to the reception of the third request. According to an embodiment, the second external server 45 may further transmit the received authentication token to the first external server 42.

In operation 423, the first external server 42 may transmit a user authentication response to the second external server 45.

According to an embodiment, the first external server 42 may perform user authentication by using the received authentication token.

When the user authentication is successful, in operation 425, the second external server 45 may generate the requested transaction token.

In operation 427, the second external server 45 may transmit the second response including the generated transaction token to the second electronic device 44.

According to an embodiment, the processor 325 of the second electronic device 44 may receive the second response including the transaction token from the second external server 45 through the second wireless communication circuit 322.

In operation 429, the processor 325 of the second electronic device 44 may transmit a third response including the transaction token received over second wireless communication, to the first electronic device 43.

According to an embodiment, the processor 317 of the first electronic device 43 may receive the third response including the transaction token from the second electronic device 44 through the second wireless communication circuit 312.

In operation 431, the processor 317 of the first electronic device 43 may radiate a payment signal including the transaction token through the payment circuit 316.

According to an embodiment, the radiated payment signal may be transmitted to the payment device 41, and the payment device 41 may perform a payment transaction by using the received payment signal.

Hereinafter, the detailed procedure in which first electronic device 51 and second electronic device 53 establish the second wireless connection will be described with reference to FIG. 5.

FIG. 5 is a flowchart illustrating a procedure in which a first electronic device and a second electronic device establish a second wireless communication, according to an embodiment of the disclosure.

Referring to FIG. 5, in operation 501, a second electronic device 53 may log in to a third external server 52 through the second wireless communication circuit 322 and may transmit an information request of a first electronic device 51.

According to an embodiment, the processor 325 of the second electronic device 53 may transmit a common ID (e.g., a group ID) and an ID (e.g., the ID of the second electronic device 53) of the second electronic device 53 to the third external server 52 to log in to the third external server 52.

According to an embodiment, in an operation in which the second electronic device 53 first logs in to the third external server 52, when a user registers a user account (e.g., Samsung account) in the second electronic device 53, the processor 325 of the second electronic device 53 may register the user account in the third external server 52 through the second wireless communication circuit 322. In an operation in which the user account is registered, the third external server 52 may receive and store the common ID from the second electronic device 53. According to an embodiment, the third external server 52 may perform an operation of establishing a wireless connection between electronic devices having the same user account as the registered user account.

According to an embodiment, the login operation may be an operation in which the processor 325 of the second electronic device 53 periodically transmits the common ID and the ID of the second electronic device 53 to the third external server 52.

According to an embodiment, the second electronic device 53 may further transmit an account token to indicate that the second electronic device 53 is a trusted device.

In operation 503, the third external server 52 may transmit a response to the request of the second electronic device 53, to the second electronic device 53.

According to an embodiment, the third external server 52 may accept the login of the second electronic device 53 by using a group ID and the ID of the second electronic device 53. According to an embodiment, when the second electronic device 53 is the trusted device, the third external server 52 may accept the login by using an account token.

According to an embodiment, when the second electronic device 53 logs in, the third external server 52 may have information (e.g., a group ID, a device ID, or the like) of the second electronic device 53 including the IP of the second electronic device 53.

According to an embodiment, when the third external server 52 receives the request of the second electronic device 53 before the first electronic device 51 logs in to the third external server 52, the third external server 52 may not have information of the first electronic device 51. In this case, the third external server 52 may transmit a response indicating that the information of the first electronic device 51 is absent, to the second electronic device 53.

According to various embodiments, when the first electronic device 51 logs in to the third external server 52 before the second electronic device 53 logs in, the third external server 52 may have the information of the first electronic device 51. In this case, the third external server 52 may transmit a response including the information of the first electronic device 51, to the second electronic device 53 in response to the request of the second electronic device 53.

In operation 505, the first electronic device 51 may log in to the third external server 52 through the second wireless communication circuit 312 and may transmit the information request of the second electronic device 53.

According to an embodiment, the processor 317 of the first electronic device 51 may transmit a common ID (e.g., a group ID) and an ID of the first electronic device 51 to the third external server 52 and may log in to the third external server 52.

According to an embodiment, in an operation in which the first electronic device 51 first logs in to the third external server 52, when the user registers a user account (e.g., Samsung account) in the first electronic device 51, the processor 317 of the first electronic device 51 may register the user account in the third external server 52 through the second wireless communication circuit 312. In an operation in which the user account is registered, the third external server 52 may receive and store the common ID from the first electronic device 51. According to an embodiment, the third external server 52 may perform an operation of establishing a wireless connection between electronic devices having the same user account as the registered user account.

According to an embodiment, the login operation may be an operation in which the processor 317 of the first electronic device 51 periodically transmits the common ID and the ID of the first electronic device 51 to the third external server 52.

According to an embodiment, the first electronic device 51 may further transmit an account token to indicate that the first electronic device 51 is a trusted device.

In operation 507, the third external server 52 may transmit a response to the request of the first electronic device 51, to the first electronic device 51.

According to an embodiment, the third external server 52 may accept the login of the first electronic device 51 by using a group ID and the ID of the first electronic device 51. According to an embodiment, when the first electronic device 51 is the trusted device, the third external server 52 may accept the login by using an account token.

According to an embodiment, when the first electronic device 51 logs in, the third external server 52 may have information (e.g., a group ID, a device ID, or the like) of the first electronic device 51 including the IP of the first electronic device 51.

In an embodiment of FIG. 5, since the second electronic device 53 logs in to the third external server 52 before the first electronic device 51 logs in, the third external server 52 may have the information of the second electronic device 53. According to an embodiment, the third external server 52 may transmit a response including the information (e.g., the IP address of the second electronic device 53, the ID of the second electronic device 53, or the like) of the second electronic device 53, to the first electronic device 51.

According to various embodiments, before the second electronic device 53 logs in to the third external server 52, the first electronic device 51 may make a request for the information of the second electronic device 53 to the third external server 52. In this case, the third external server 52 may transmit a response indicating that the information of the second electronic device 53 is absent, to the first electronic device 51 in response to the request of the first electronic device 51.

In operation 509, the second electronic device 53 may transmit the information request of the first electronic device 51 to the third external server 52 again.

According to an embodiment, since the second electronic device 53 does not receive the information of the first electronic device 51, the second electronic device 53 may transmit the information request of the first electronic device 51 to the third external server 52 after a specific time elapses after operation 503.

According to an embodiment, since the first electronic device 51 logs in to the third external server 52 before operation 509, the third external server 52 may have the information of the first electronic device 51.

In operation 511, the third external server 52 may transmit a response including the information of the first electronic device 51 to the second electronic device 53.

According to an embodiment, the response may include the IP address of the first electronic device 51, the ID of the first electronic device 51, or the like.

In operation 513, the first electronic device 51 and the second electronic device 53 may establish a second wireless connection.

According to an embodiment, the first electronic device 51 and the second electronic device 53 may establish the second wireless connection by using the IP address of each other. According to an embodiment, the second wireless connection may be a P2P connection via the Internet.

According to an embodiment, after the second wireless connection is established, the first electronic device 51 and the second electronic device 53 may transmit and/or receive data through the second wireless connection.

In operation 515, the first electronic device 51 and the second electronic device 53 may generate a security channel.

According to an embodiment, the first electronic device 51 and the second electronic device 53 may perform encryption communication to generate the security channel. For example, the second electronic device 53 may transmit the encryption key shared in operation 403 to the first electronic device 51 through the third external server 52. The first electronic device 51 may verify the received encryption key by using the encryption key corresponding to the first electronic device 51. The first electronic device 51 may transmit the encryption key shared in operation 403 to the second electronic device 53 through the third external server 52. The second electronic device 53 may verify the received encryption key by using the encryption key corresponding to the second electronic device 53. According to an embodiment, when the encryption key is verified, the first electronic device 51 and the second electronic device 53 may generate a security channel session key by using the shared encryption key.

According to an embodiment, when the security channel session key is generated, that is, when a security channel is generated, the first electronic device 51 and the second electronic device 53 may transmit and/or receive data through the security channel. For example, the second request in operation 417 and the third response in operation 429 may be transmitted through the security channel.

In the descriptions given with reference to FIG. 5, it is described that the security channel is established immediately after the second wireless connection is established. However, according to an embodiment, operations 501, 503, 505, 507, 509, 511, and 513 may be performed before operation 409 described above, and operation 515 may be performed after operation 409.

According to various embodiments, when at least one of first electronic device 61 or second electronic device 63 is connected to the Internet through an access point (AP), third external server 62 may identify the IP address of an electronic device connected to the AP, as the IP address of the AP. In this case, first electronic device 61 and second electronic device 63 may not make a P2P connection using an IP address.

According to various embodiments, when the P2P connection between first electronic device 61 and second electronic device 63 by using the IP address fails, first electronic device 61 and second electronic device 63 may transmit data (e.g., the second request in operation 417 or the third response in operation 429) to third external server 62, and may receive data (e.g., the second request in operation 417 or the third response in operation 429) from third external server 62.

According to an embodiment, it may be limited to use a specified communication scheme (e.g., cellular communication) when first electronic device 61 and second electronic device 63 transmits and/or receives an authentication token and a transaction token. Hereinafter, the detailed procedure in which a communication scheme of second electronic device 63 is changed to a predetermined communication scheme will be described with reference to FIG. 6. The procedure of FIG. 6 may be performed before operation 419 described above.

FIG. 6 is a flowchart illustrating a procedure in which a communication scheme of a second electronic device is changed, according to an embodiment of the disclosure.

In an embodiment given with reference to FIG. 6, it is assumed that the second wireless communication circuit 322 of second electronic device 63 is a communication circuit providing Wi-Fi communication and the third wireless communication circuit 323 of second electronic device 63 is a communication circuit providing cellular communication. In an embodiment, it is assumed that the predetermined communication scheme is cellular communication.

Referring to FIG. 6, in operation 601, the processor 317 of a first electronic device 61 may transmit a communication scheme changing request to a second electronic device 63 through the second wireless communication circuit 312.

According to an embodiment, the communication scheme changing request may be a request for changing a communication scheme, which is used by the second electronic device 63, to a cellular communication scheme.

In operation 603, the processor 325 of the second electronic device 63 may change the used communication scheme.

According to an embodiment, the processor 325 of the second electronic device 63 may access the Internet through the second wireless communication circuit 322 providing Wi-Fi communication and may establish a second wireless communication with the first electronic device 61. According to an embodiment, for the purpose of changing a communication scheme to a cellular communication scheme, the processor 325 of the second electronic device 63 may access the Internet through the third wireless communication circuit 323 providing cellular communication. According to an embodiment, when the processor 325 of the second electronic device 63 accesses the Internet through the third wireless communication circuit 323, the second electronic device 63 may have a new IP address.

According to an embodiment, the processor 325 of the second electronic device 63 may access the Internet through both the second wireless communication circuit 322 and the third wireless communication circuit 323.

In operation 605, the processor 325 of the second electronic device 63 may log in to a third external server 62 through the second wireless communication circuit 322 and may transmit the information request of the first electronic device 61.

According to an embodiment, the processor 325 of the second electronic device 63 may transmit a common ID (e.g., a group ID) and an ID (e.g., the ID of the second electronic device 63) of the second electronic device 63 to the third external server 62 to log in to the third external server 62.

According to an embodiment, the second electronic device 63 may log in to the third external server 62 through the third wireless communication circuit 323. Since the second electronic device 63 has a new IP address, the third external server 62 may have the new IP address of the second electronic device 63.

In operation 607, the third external server 62 may transmit a response responding to the request of the second electronic device 63, to the second electronic device 63.

According to an embodiment, the third external server 62 may transmit a response including the information of the first electronic device 61 to the second electronic device 63.

According to various embodiments, while the processor 317 of the first electronic device 61 establishes a second wireless connection with the second electronic device 63 through the second wireless communication circuit 312 before operation 601, the processor 317 of the first electronic device 61 may access the Internet through the third wireless communication circuit 313 and may have the new IP address. According to various embodiments, the processor 317 of the first electronic device 61 may log in to the third external server 62 through the third wireless communication circuit 313, and the third external server 62 may have the new IP address of the first electronic device 61.

In this case, in operation 607, the third external server 62 may transmit a response including the new IP address of the first electronic device 61, to the second electronic device 63.

In operation 609, the processor 317 of the first electronic device 61 may transmit the information request of the second electronic device 63 to the third external server 62.

According to an embodiment, when the first electronic device 61 uses the second wireless communication circuit 312, the processor 317 of the first electronic device 61 may transmit the information request of the second electronic device 63 to the third external server 62 through the second wireless communication circuit 312.

According to an embodiment, when the first electronic device 61 uses the third wireless communication circuit 313, the processor 317 of the first electronic device 61 may transmit the information request of the second electronic device 63 to the third external server 62 through the third wireless communication circuit 313.

According to an embodiment, the information of the second electronic device 63 requested by the first electronic device 61 may include the changed IP address of the second electronic device 63.

In operation 611, the third external server 62 may transmit a response including the changed IP address of the second electronic device 63, to the first electronic device 61.

Afterward, the first electronic device 61 may use the second wireless communication circuit 312, and the second electronic device 63 may use the third wireless communication circuit 313, and thus may establish a new second wireless connection. In other words, the first electronic device 61 and the second electronic device 63 may establish the second wireless connection by using the IP address of the first electronic device 61 and a new IP address of the second electronic device 63.

In an embodiment, when the first electronic device 61 changes a communication scheme to the communication scheme (e.g., cellular communication) provided by the third wireless communication circuit 313, both the first electronic device 61 and the second electronic device 63 may establish the new second wireless connection by using the third wireless communication circuits 313 and 323. In other words, the first electronic device 61 and the second electronic device 63 may establish the second wireless connection by using a new IP address of the first electronic device 61 and a new IP address of the second electronic device 63.

According to various embodiments, the second electronic device 63 may transmit a communication scheme changing request to the first electronic device 61. In this case, the operations of the first electronic device 61 described with reference to FIG. 6 may be performed by the second electronic device 63, and the operations of the second electronic device 63 may be performed by the first electronic device 61.

Hereinafter, each of the operation of the first electronic device 310 and the operation of the second electronic device 320 will be described to make a payment described above.

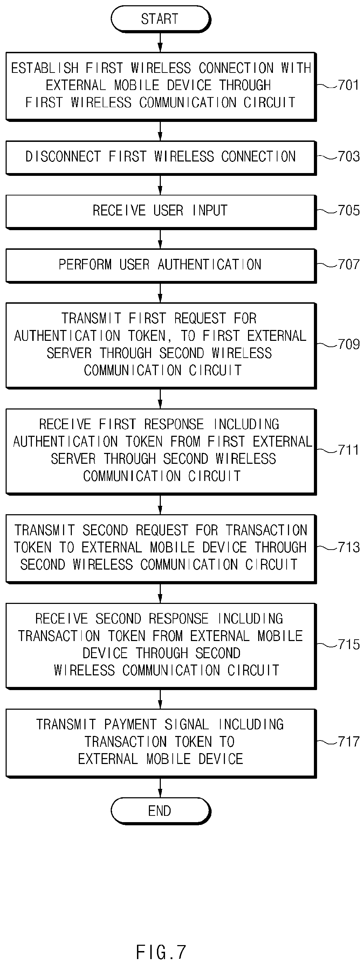

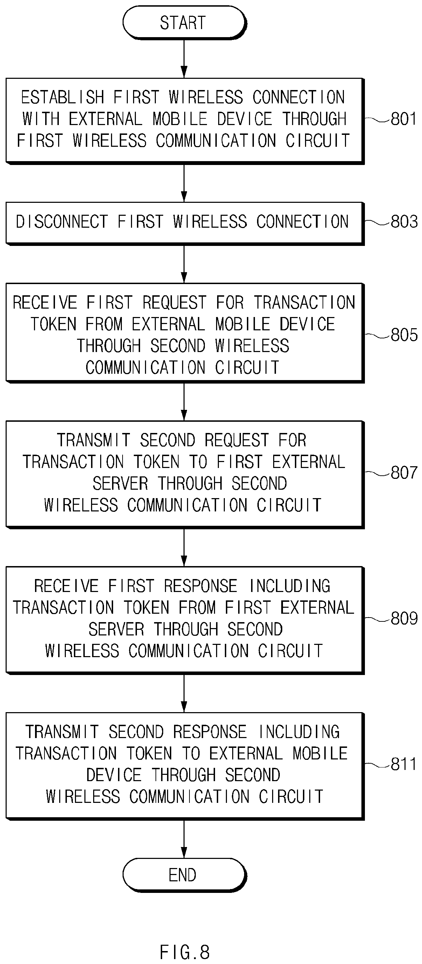

Hereinafter, it is assumed that the devices of FIG. 3 perform the processes of FIGS. 7 and 8.

FIG. 7 is a flowchart illustrating an operation performed by a first electronic device to make a payment, according to an embodiment of the disclosure.

In the descriptions given with reference to FIG. 7, an external mobile device may correspond to the second electronic device 320, and a first external server may correspond to the user authentication server 330.

Referring to FIG. 7, in operation 701, the processor 317 of the first electronic device 310 may establish a first wireless connection with the external mobile device through the first wireless communication circuit 311.

According to an embodiment, the first electronic device 310 and the external mobile device may be paired with each other over Bluetooth communication.

According to an embodiment, the processor 317 of the first electronic device 310 may receive and store a common ID associated with the external mobile device through the first wireless connection.

According to an embodiment, operation 701 may correspond to operation 401 described above.

In operation 703, the processor 317 of the first electronic device 310 may disconnect the first wireless connection.

According to an embodiment, when the first wireless connection is interrupted, the processor 317 of the first electronic device 310 may establish a second wireless connection with the external mobile device through the second wireless communication circuit 312.

According to an embodiment, operation 703 may correspond to operation 405 described above.

In operation 705, the processor 317 of the first electronic device 310 may receive a user input through the user interface 314.

According to an embodiment, the processor 317 of the first electronic device 310 may receive a user input in a state where the first wireless connection is disconnected.

According to an embodiment, the user input may be a user input to request a transaction.

According to an embodiment, operation 705 may correspond to operation 409 described above.

In operation 707, the processor 317 of the first electronic device 310 may perform user authentication in response to the user input.

According to an embodiment, the processor 317 of the first electronic device 310 may use at least one authentication scheme of a password authentication scheme, a pattern authentication scheme, a fingerprint authentication scheme, or an iris authentication scheme, for the user authentication.

According to an embodiment, operation 707 may correspond to operation 411 described above.

When the user authentication is successful, in operation 709, the processor 317 of the first electronic device 310 may transmit a first request for an authentication token, to the first external server through the second wireless communication circuit 312.

According to an embodiment, the first request may further include at least one of a user account ID, a FIDO ID, a device ID, a card member ID, a credit card issuer code, or an authentication type.

According to an embodiment, operation 709 may correspond to operation 413 described above.

In operation 711, the processor 317 of the first electronic device 310 may receive the first response including the authentication token from the first external server through the second wireless communication circuit 312.

According to an embodiment, operation 711 may correspond to operation 415 described above.

In operation 713, the processor 317 of the first electronic device 310 may transmit a second request for a transaction token to the external mobile device through the second wireless communication circuit 312.

According to an embodiment, the processor 317 of the first electronic device 310 may transmit a second request through the established second wireless communication. According to an embodiment, the processor 317 of the first electronic device 310 may further transmit the authentication token received from the first external server, to the external mobile device through the second wireless communication circuit 312.

According to an embodiment, operation 713 may correspond to operation 417 described above.

In operation 715, the processor 317 of the first electronic device 310 may receive a second response including the transaction token from the external mobile device through the second wireless communication.

According to an embodiment, operation 715 may correspond to operation 429 described above.

In operation 717, the processor 317 of the first electronic device 310 may radiate a payment signal including the transaction token through the payment circuit 316.

According to an embodiment, operation 717 may correspond to operation 431 described above.

FIG. 8 is a flowchart illustrating an operation performed by the second electronic device to make a payment, according to an embodiment of the disclosure.

In the descriptions given with reference to FIG. 8, an external mobile device may correspond to the first electronic device 310, and a first external server may correspond to the payment server 350.

Referring to FIG. 8, in operation 801, the processor 325 of the second electronic device 320 may establish a first wireless connection with the external mobile device through the first wireless communication circuit 321.

According to an embodiment, the second electronic device 320 and the external mobile device may be paired with each other over Bluetooth communication.

According to an embodiment, the processor 325 of the second electronic device 320 may transmit a common ID through a first wireless connection.

According to an embodiment, operation 801 may correspond to operation 401 described above.

In operation 803, the processor 325 of the second electronic device 320 may disconnect the first wireless connection.

According to an embodiment, when the first wireless connection is interrupted, the processor 325 of the second electronic device 320 may establish a second wireless connection with the external mobile device through the second wireless communication circuit 322.

According to an embodiment, operation 803 may correspond to operation 405 described above.

In operation 805, the processor 325 of the second electronic device 320 may receive a first request for a transaction token from the external mobile device through the second wireless communication circuit 322.

According to an embodiment, the processor 325 of the second electronic device 320 may receive the first request through the established second wireless communication.

According to an embodiment, the processor 325 of the second electronic device 320 may further receive an authentication token from the external mobile device through the second wireless communication circuit 322.

According to an embodiment, operation 805 may correspond to operation 417 described above.

In operation 807, the processor 325 of the second electronic device 320 may transmit the second request for the transaction token to the first external server through the second wireless communication circuit 322.

According to an embodiment, the processor 325 of the second electronic device 320 may further transmit an authentication token received from the external mobile device, to the first external server through the second wireless communication circuit 322.

According to an embodiment, operation 807 may correspond to operation 419 described above.

In operation 809, the processor 325 of the second electronic device 320 may receive the first response including a transaction token from the first external server through the second wireless communication circuit 322.

According to an embodiment, operation 809 may correspond to operation 427 described above.

In operation 811, the processor 325 of the second electronic device 320 may transmit a second response including the transaction token received over second wireless communication, to the external mobile device.

According to an embodiment, operation 811 may correspond to operation 429 described above.

According to various embodiments, the second electronic device 320 may establish the first wireless connection and the second wireless connection with the plurality of first electronic devices. According to various embodiments, the second electronic device 320 may be configured to approve the transaction token request of an electronic device, which is selected by a user, from among the plurality of first electronic devices.

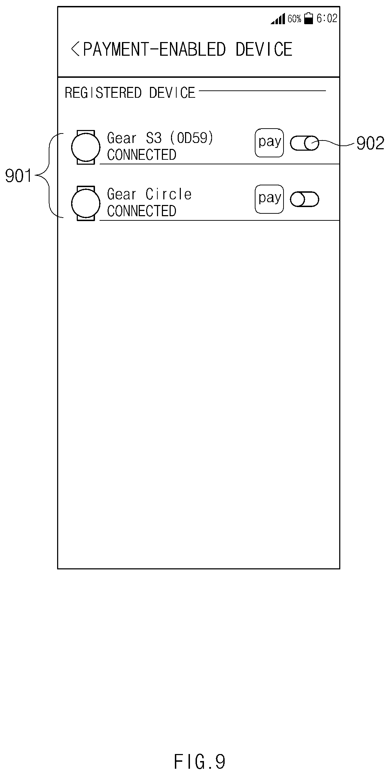

FIG. 9 illustrates a screen for setting an electronic device, a transaction token request of which is to be approved, according to an embodiment of the disclosure.

Referring to FIG. 9, the second electronic device 320 may display a list 901 of the first electronic device 310 while a first wireless connection is established or has been established. According to an embodiment, the second electronic device 320 may display an object 902 for setting whether to approve the transaction token request of the first electronic device 310. According to an embodiment, whether the transaction token request of the first electronic device 310 is approved may be set in response to a user input to select the object 902.

According to various embodiments, when the second electronic device 320 is being used by a user, the second electronic device 320 may reject the transaction token request from the first electronic device 310.

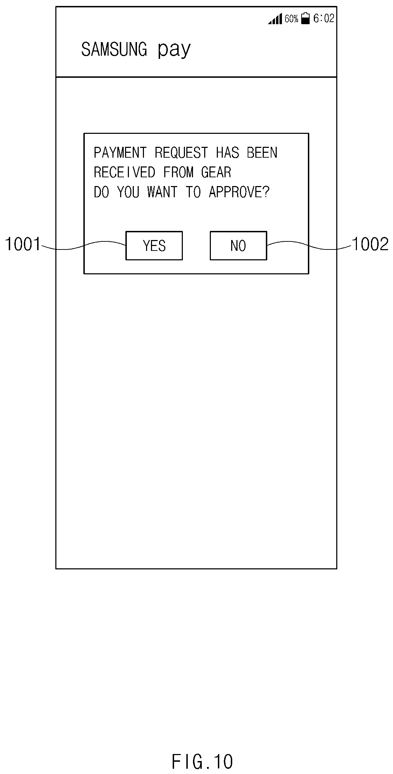

FIG. 10 illustrates a screen displayed when an electronic device receives a transaction token request, according to an embodiment of the disclosure.

According to various embodiments, when a transaction token request from the first electronic device 310 is received, as illustrated in FIG. 10, the processor of the second electronic device 320 may display a user interface (UI) for querying whether to approve the transaction token request. The processor of the second electronic device 320 may perform operation 419 described above or may reject the transaction token request, in response to a user input to select whether to approve 1001 or not to approve 1002.

The electronic device according to various embodiments disclosed in the disclosure may be various types of devices. The electronic device may include, for example, at least one of a portable communication device (e.g., a smartphone), a computer device, a portable multimedia device, a mobile medical appliance, a camera, a wearable device, or a home appliance. The electronic device according to an embodiment of the disclosure should not be limited to the above-mentioned devices.

It should be understood that various embodiments of the disclosure and terms used in the embodiments do not intend to limit technologies disclosed in the disclosure to the particular forms disclosed herein; rather, the disclosure should be construed to cover various modifications, equivalents, and/or alternatives of embodiments of the disclosure. With regard to description of drawings, similar components may be assigned with similar reference numerals. As used herein, singular forms may include plural forms as well unless the context clearly indicates otherwise. In the disclosure disclosed herein, the expressions "A or B," "at least one of A or/and B," "A, B, or C," or "one or more of A, B, or/and C" and the like used herein may include any and all combinations of one or more of the associated listed items. The expressions "a first," "a second," "the first," or "the second," used in herein, may refer to various components regardless of the order and/or the importance, but do not limit the corresponding components. The above expressions are used merely for the purpose of distinguishing a component from the other components. It should be understood that when a component (e.g., a first component) is referred to as being (operatively or communicatively) "connected," or "coupled," to another component (e.g., a second component), it may be directly connected or coupled directly to the other component or any other component (e.g., a third component) may be interposed between them.

The term "module" used herein may represent, for example, a unit including one or more combinations of hardware, software and firmware. The term "module" may be interchangeably used with the terms "logic," "logical block," "part," and "circuit." The "module" may be a minimum unit of an integrated part or may be a part thereof. The "module" may be a minimum unit for performing one or more functions or a part thereof. For example, the "module" may include an application-specific integrated circuit (ASIC).

Various embodiments of the disclosure may be implemented by software (e.g., the program 140) including an instruction stored in a machine-readable storage media (e.g., an internal memory 136 or an external memory 138) readable by a machine (e.g., a computer). The machine may be a device that calls the instruction from the machine-readable storage media and operates depending on the called instruction and may include the electronic device (e.g., the electronic device 101). When the instruction is executed by the processor (e.g., the processor 120), the processor may perform a function corresponding to the instruction directly or using other components under the control of the processor. The instruction may include a code generated or executed by a compiler or an interpreter. The machine-readable storage media may be provided in the form of non-transitory storage media. Here, the term "non-transitory," as used herein, is a limitation of the medium itself (i.e., tangible, not a signal) as opposed to a limitation on data storage persistency.

According to an embodiment, the method according to various embodiments disclosed in the disclosure may be provided as a part of a computer program product. The computer program product may be traded between a seller and a buyer as a product. The computer program product may be distributed in the form of machine-readable storage medium (e.g., a compact disc read only memory (CD-ROM)) or may be distributed only through an application store (e.g., a Play Store™). In the case of online distribution, at least a portion of the computer program product may be temporarily stored or generated in a storage medium such as a memory of a manufacturer's server, an application store's server, or a relay server.

Each component (e.g., the module or the program) according to various embodiments may include at least one of the above components, and a portion of the above sub-components may be omitted, or additional other sub-components may be further included. Alternatively or additionally, some components (e.g., the module or the program) may be integrated in one component and may perform the same or similar functions performed by each corresponding component prior to the integration. Operations performed by a module, a programming, or other components according to various embodiments of the disclosure may be executed sequentially, in parallel, repeatedly, or in a heuristic method. Also, at least some operations may be executed in different sequences, omitted, or other operations may be added.

While the disclosure has been shown and described with reference to various embodiments thereof, it will be understood by those skilled in the art that various changes in form and details may be made therein without departing from the scope of the disclosure as defined by the appended claims and their equivalents.

## Claims

1. An electronic device comprising:
a first wireless communication circuit configured to establish a first wireless connection with an external mobile device;
a second wireless communication circuit configured to wirelessly access an internet;
a user interface;
a processor operatively connected to the first wireless communication circuit, the second wireless communication circuit, and the user interface; and
a memory operatively connected to the processor,
wherein the memory stores instructions that, when executed, cause the processor to:
when a payment request occurs while the first wireless connection is interrupted, receive a user input through the user interface,
in response to receiving the user input, perform a user authentication,
when the user authentication is successful, transmit a first request for an authentication token to a first external server through the second wireless communication circuit,
receive a first response including the authentication token from the first external server through the second wireless communication circuit,
after receiving the first response, transmit a second request for a transaction token to the external mobile device through the second wireless communication circuit, and
receive a second response including the transaction token from the external mobile device through the second wireless communication circuit.

2. The electronic device of claim 1,
wherein the first wireless communication circuit is configured to provide bluetooth communication,
wherein the second wireless communication circuit is configured to provide Wi-Fi communication or cellular communication, and
wherein the user input comprises an input to execute an application for performing a payment transaction and an input to select a means for performing the payment transaction.

3. The electronic device of claim 1, wherein the first request further includes at least one of a user account identification (ID), a fast identity online (FIDO) ID, a device ID, a card member ID, a credit card issuer code, or an authentication type.

4. The electronic device of claim 1, wherein the first response further includes at least one of a fast identity online (FIDO) authentication token or a key identification (ID).

5. The electronic device of claim 1, further comprising:
at least one of a near field communication (NFC) circuit or a magnetic secure transmission (MST) circuit,
wherein the instructions further cause the processor to output a signal including the transaction token by using at least one of the NFC circuit or the MST circuit.

6. The electronic device of claim 1, wherein, before the first wireless connection is interrupted, the instructions further cause the processor to:
establish the first wireless connection with the external mobile device through the first wireless communication circuit;
share a common identification (ID) with the external mobile device through the first wireless communication circuit; and
when the first wireless connection is interrupted, establish a second wireless connection with the external mobile device through the second wireless communication circuit by using the common ID.

7. The electronic device of claim 6, wherein the instructions further cause the processor to:
transmit the common ID and an ID of the electronic device to a second external server through the second wireless communication circuit;
receive an internet protocol (IP) address of the external mobile device from the second external server; and
establish the second wireless connection with the external mobile device by using the IP address,
wherein the second request is transmitted through the second wireless connection, and
wherein the second response is received through the second wireless connection.

8. The electronic device of claim 1, wherein the instructions further cause the processor to:
generate a security channel to the external mobile device through the second wireless communication circuit,
wherein the second request is transmitted through the security channel, and
wherein the second response is received through the security channel.

9. The electronic device of claim 1, wherein the instructions further cause the processor to:
in response to receiving the user input, transmit a request for an address of the first external server to the external mobile device through the second wireless communication circuit;
receive the address of the first external server from the external mobile device through the second wireless communication circuit; and
transmit the first request to the first external server with reference to the received address of the first external server.

10. The electronic device of claim 1, wherein the instructions further cause the processor to:
before transmitting the second request, transmit a request for changing a communication scheme, which is used by the external mobile device, to a predetermined communication scheme to the external mobile device through the second wireless communication circuit;
make a request for an internet protocol (IP) address of the external mobile device according to the predetermined communication scheme, to a second external server through the second wireless communication circuit;
receive the IP address of the external mobile device from the second external server through the second wireless communication circuit; and
establish a second wireless connection through the second wireless communication circuit by using the IP address.

11. The electronic device of claim 1, wherein the instructions further cause the processor to, after receiving the first response, transmit the authentication token to the external mobile device through the second wireless communication circuit.

12. An electronic device comprising:
a first wireless communication circuit configured to establish a first wireless connection with an external mobile device;
a second wireless communication circuit configured to wirelessly access an internet;
a processor operatively connected to the first wireless communication circuit and the second wireless communication circuit; and
a memory operatively connected to the processor,
wherein the memory stores instructions that, when executed, cause the processor to:
establish the first wireless connection with the external mobile device through the first wireless communication circuit,
share a common identification (ID) with the external mobile device through the first wireless communication circuit,
while the first wireless connection is interrupted, receive a first request for a transaction token from the external mobile device through the second wireless communication circuit,
in response to receiving the first request, transmit a second request for the transaction token to a first external server through the second wireless communication circuit,
receive a first response including the transaction token from the first external server through the second wireless communication circuit, and
in response to receiving the first response, transmit a second response including the transaction token to the external mobile device through the second wireless communication circuit.

13. The electronic device of claim 12, wherein the instructions further cause the processor to:
in response to the first wireless connection being disconnected, establish a second wireless connection with the external mobile device through the second wireless communication circuit by using the common ID,
wherein the first request is received through the second wireless connection, and
wherein the second response is transmitted through the second wireless connection.

14. The electronic device of claim 12, wherein the instructions further cause the processor to:
transmit the common ID and an ID of the electronic device to a second external server through the second wireless communication circuit;
receive an IP address of the external mobile device from the second external server; and
establish the second wireless connection with the external mobile device by using the IP address,
wherein the second request is received through the second wireless connection, and
wherein the second response is transmitted through the second wireless connection.

15. The electronic device of claim 12,
wherein the first wireless communication circuit is configured to provide bluetooth communication, and
wherein the second wireless communication circuit is configured to provide Wi-Fi communication or cellular communication.
